# FASCICULE DE BREVET EUROPEEN

(11) **EP 2 851 529 B1**
(45) Date de publication et mention de la délivrance du brevet: **29.06.2016**
(21) Numéro de dépôt: 14183658.5
(22) Date de dépôt: 05.09.2014
(51) Int. Cl.: F01N 3/20

(54) **Procédé de purge d'un système de réduction catalytique sélective**
Reinigungsverfahren eines Systems mit selektiver katalytischer Reduktion
Method for purging a selective catalytic reduction system

(30) Priorité: 19.09.2013 FR 1359033
(43) Date de publication de la demande: 25.03.2015
(73) Titulaire: PEUGEOT CITROËN AUTOMOBILES SA, 78140 Vélizy-Villacoublay (FR)
(72) Inventeur: JUMEL, Guillaume, 78290 Croissy sur Seine (FR); ARTAULT, Mathieu, 92700 Colombes (FR)

(56) Documents cités:
- FR-A1- 2 951 775
- FR-A1- 2 965 295

## Description

L'invention porte sur un procédé de purge d'un système de réduction catalytique sélective ainsi que sur le système SCR et le véhicule automobile correspondants.

Dans un contexte de dépollution des gaz d'échappement d'un moteur diesel, les systèmes de réduction catalytique sélective (ou SCR pour "Sélective Catalyst Réduction" en anglais) ont pour but de réduire les oxydes d'azote (NOX) contenus dans les gaz d'échappement. Le système SCR utilise une réaction chimique entre ces mêmes NOX et un réducteur. Classiquement le réducteur est de l'ammoniac. L'ammoniac est injecté dans la ligne d'échappement des gaz. L'injection de l'ammoniac est généralement réalisée par l'intermédiaire d'une autre espèce chimique, telle que l'urée qui se décompose en ammoniac et en dioxyde de carbone sous l'effet de la chaleur.

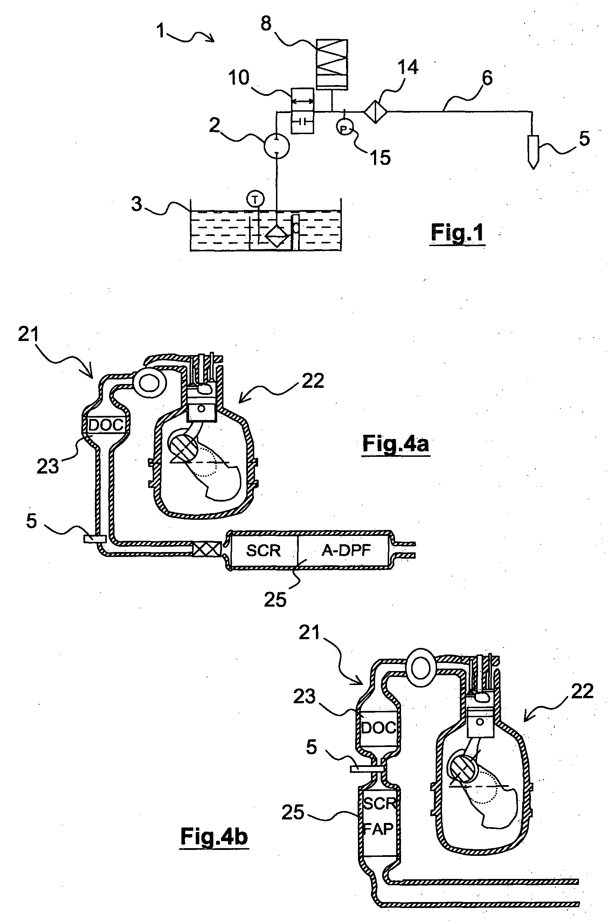

La figure 1 montre un exemple d'un système SCR 1 adapté pour injecter du réducteur dans une ligne d'échappement d'un véhicule.

A cet effet, le système SCR 1 comprend une pompe 2 réversible en relation avec un réservoir 3 de réducteur, un injecteur 5 placé dans une ligne d'échappement du véhicule, et une canalisation 6 reliant l'injecteur 5 à la pompe 2. En outre, un accumulateur 8 de mise sous pression du réducteur est implanté entre la pompe 2 et l'injecteur 5.

Une vanne 10 est positionnée entre la pompe 2 et l'accumulateur 8. Lorsque l'accumulateur 8 est rempli de réducteur, la fermeture de cette vanne 10 est commandée en sorte que le réducteur ne circule plus entre d'une part l'accumulateur 8, et d'autre part le réservoir 3 et la pompe 2. La pompe 2 peut alors être mise au repos. Un filtre 14 et un capteur de pression 15 sont installés entre l'accumulateur 8 et l'injecteur 5.

L'injecteur 5 est pourvu d'un obturateur qui s'ouvre sous la pression régnant dans la canalisation 6 ou suivant une commande électrique d'ouverture, ce qui permet l'injection de réducteur dans la ligne d'échappement. Après injection, l'obturateur se ferme. Des systèmes analogues sont divulgués dans les documents FR2965295 et FR2951775.

Les composants du système SCR ne résistent pas tous au gel du réducteur. Ainsi, il existe des risques de bouchage de l'injecteur 5 mais également des risques d'endommagement, voire d'éclatement, de la canalisation 6 en cas d'expansion du réducteur due au gel.

Afin d'éviter tout risque de détérioration, il est donc nécessaire de purger le système après chaque arrêt véhicule. La stratégie de purge actuelle consiste, dans une première phase, à ouvrir la vanne 10 alors que l'injecteur 5 est fermé et à mettre en rotation la pompe 2 en sens inverse (mode aspiration) pendant une première durée calibrée. Cette première phase vise à décharger l'accumulateur 8 afin de s'assurer que le système n'est plus en pression une fois le véhicule arrêté.

Une deuxième phase consiste à ouvrir l'injecteur 5 tout en faisant fonctionner la pompe en sens inverse pendant une deuxième durée calibrée. A la fin de cette deuxième durée calibrée, la pompe est arrêtée et l'injecteur est fermé. La deuxième durée calibrée est généralement égale à la première durée calibrée. Ces durées sont chacune de l'ordre de six secondes. Cette deuxième phase a pour but de vider au maximum les canalisations du système, afin qu'il ne reste plus de réducteur dans l'injecteur susceptible de former un bouchon à basse température et d'empêcher son fonctionnement.

Lors de cette deuxième phase, il se produit une aspiration des gaz d'échappement non encore traités qui remplissent la canalisation entre l'accumulateur et l'injecteur. Or, ces gaz d'échappement peuvent engendrer une défaillance par encrassement des éléments du système, en particulier le filtre et le capteur de pression.

L'invention vise à remédier efficacement à cet inconvénient en proposant un procédé de purge d'un système de réduction catalytique sélective (SCR) pour véhicule automobile comprenant une pompe réversible en relation avec un réservoir de réducteur, un injecteur destiné à être placé dans une ligne d'échappement du véhicule, une canalisation reliant ledit injecteur à ladite pompe, un accumulateur de mise sous pression du réducteur implanté entre ladite pompe et ledit injecteur et une vanne installée entre ledit accumulateur et ledit injecteur, caractérisé en ce que, ledit système étant sous pression, ledit injecteur étant fermé et ladite vanne étant ouverte, ledit procédé comporte une première phase de décharge de l'accumulateur permettant de diminuer la pression à l'intérieur du système, et une deuxième phase de purge comportant l'étape d'ouvrir ledit injecteur et de faire fonctionner ladite pompe en mode aspiration pendant une durée calibrée puis de commander une fermeture de ladite vanne et dudit injecteur à la fin de ladite durée calibrée.

L'invention permet ainsi de vidanger uniquement l'injecteur et une partie de la canalisation, ce qui évite que les gaz d'échappement puissent entrer dans la canalisation et encrassent les différents éléments du système SCR. On garantit en outre que le système supportera les basses températures, dans la mesure où la canalisation est vidée suffisamment pour autoriser une expansion volumique du réducteur en cas de gel. On note également que l'invention permet de limiter le temps de fonctionnement de la pompe au cours de la seconde phase de purge. De ce fait, l'invention permet d'augmenter la durée de vie de la pompe et de limiter la consommation électrique de manière significative compte tenu du nombre élevé d'arrêts sur la durée de vie complète du véhicule.

Selon une mise en oeuvre, ladite phase de décharge dudit accumulateur comporte l'étape de faire fonctionner ladite pompe en mode aspiration alors que ledit injecteur est fermé pendant une durée calibrée.

Selon une mise en oeuvre, la durée calibrée de fonctionnement de la pompe lors de la première phase de décharge de l'accumulateur est supérieure à la durée calibrée de fonctionnement de la pompe lors de la deuxième phase de purge.

Selon une mise en oeuvre, ledit système comportant en outre une vanne implantée sur un conduit ayant une extrémité située entre ledit accumulateur et ledit injecteur et une deuxième extrémité débouchant vers ledit réservoir, ladite première phase de décharge dudit accumulateur comporte l'étape d'ouvrir ladite vanne alors que le système est sous pression. La commande d'une telle vanne permet d'augmenter la durée de vie et de réduire encore davantage la consommation électrique de la pompe étant donné qu'il n'est pas nécessaire d'activer la pompe lors de la phase de décharge de l'accumulateur.

Selon une mise en oeuvre, la durée calibrée de fonctionnement de la pompe lors de la deuxième phase de purge vaut environ 1 seconde.

L'invention a également pour objet un système de réduction catalytique sélective pour véhicule automobile comprenant une pompe réversible en relation avec un réservoir de réducteur, un injecteur destiné à être placé dans une ligne d'échappement dudit véhicule automobile, une canalisation reliant ledit injecteur à ladite pompe, un accumulateur de mise sous pression du réducteur implanté entre ladite pompe et ledit injecteur, caractérisé en ce qu'il comporte en outre une vanne installée entre ledit accumulateur et ledit injecteur.

Selon une réalisation, le système SCR comporte en outre une vanne implantée sur un conduit ayant une première extrémité située entre ledit accumulateur et ledit injecteur et une deuxième extrémité débouchant vers ledit réservoir.

Selon une réalisation, le système SCR comporte en outre une vanne positionnée entre ladite pompe et ledit accumulateur.

Selon une réalisation, le système SCR comporte un filtre et un capteur de pression installés entre ledit accumulateur et ledit injecteur.

L'invention a également pour objet un véhicule automobile muni d'un système de réduction catalytique sélective selon la présente invention comportant un injecteur implanté sur une ligne d'échappement dudit véhicule automobile entre un catalyseur d'oxydation diesel et un bloc de dépollution comportant un catalyseur dudit système de réduction catalytique sélective associé à un filtre à particules.

L'invention sera mieux comprise à la lecture de la description qui suit et à l'examen des figures qui l'accompagnent. Ces figures ne sont données qu'à titre illustratif mais nullement limitatif de l'invention.

La figure 1, déjà décrite, est une représentation schématique d'un système de réduction catalytique sélective (SCR) mettant en oeuvre un procédé de purge selon l'état de la technique;

La figure 2a montre une représentation schématique d'un premier mode de réalisation d'un système de réduction catalytique sélective (SCR) selon la présente invention;

La figure 2b représente un diagramme des étapes du procédé de purge selon la présente invention mises en oeuvre par le système SCR de la figure 2a;

La figure 3a montre une représentation schématique d'un deuxième mode de réalisation d'un système de réduction catalytique sélective (SCR) selon la présente invention;

La figure 3b représente un diagramme des étapes du procédé de purge selon la présente invention mises en oeuvre par le système SCR de la figure 3a;

Les figures 4a et 4b montrent des variantes de réalisation d'une ligne d'échappement d'un véhicule automobile sur laquelle est implanté l'injecteur du système SCR selon la présente invention.

Les éléments identiques, similaires, ou analogues conservent la même référence d'une figure à l'autre.

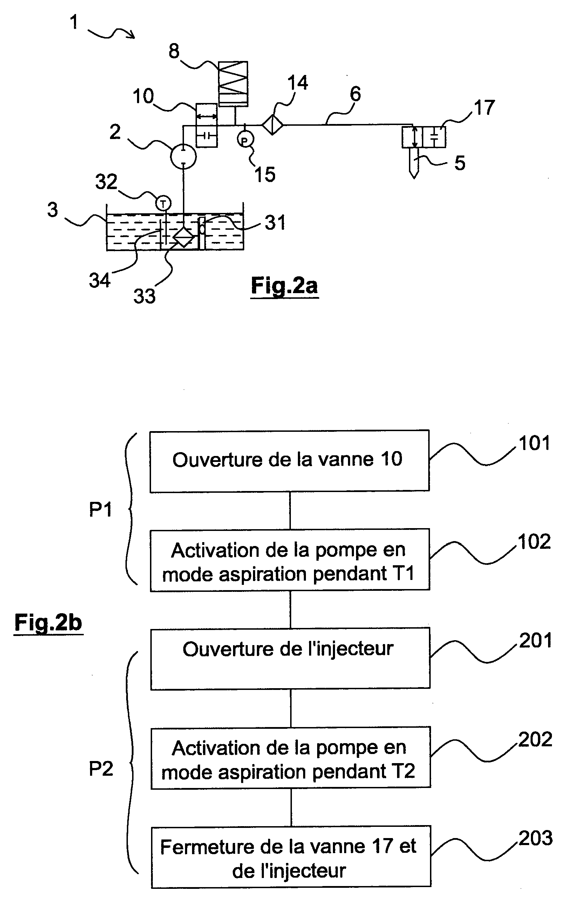

La figure 2a montre un exemple de réalisation d'un système 1 de réduction catalytique sélective, ou système SCR pour "Sélective Catalyst Réduction" en anglais, adapté pour injecter du réducteur dans une ligne d'échappement d'un véhicule.

A cet effet, le système SCR 1 comprend une pompe 2 en relation avec un réservoir 3, un injecteur 5 placé dans une ligne d'échappement du véhicule, et une canalisation 6 reliant l'injecteur 5 à la pompe 2. En outre, un accumulateur 8 de mise sous pression du réducteur est implanté entre la pompe 2 et l'injecteur 5. Un système de jauge 31, un capteur de température 32, et un filtre 33 pourront être associés à un bol 34 positionné à l'intérieur du réservoir 3. Le réservoir 3 est par exemple positionné sous une zone arrière du plancher du véhicule.

La pompe 2 est réversible, c'est-à-dire qu'elle peut produire une aspiration ou un refoulement dans la canalisation 6. En fonctionnement normal, la pompe 2 est en mode de refoulement, c'est-à-dire que la pompe 2 prélève le réducteur du réservoir 3 afin de remplir l'accumulateur 8 de réducteur ou d'alimenter directement l'injecteur 5.

Une vanne 10 est positionnée entre la pompe 2 et l'accumulateur 8 de réducteur. Cette vanne 10 comme toutes les autres vannes ci-après prendra la forme d'une électrovanne dont l'ouverture et la fermeture sont commandées électriquement. Lorsque l'accumulateur 8 est rempli de réducteur, la fermeture de cette vanne 10 est commandée en sorte que le réducteur ne circule plus entre d'une part l'accumulateur 8 et d'autre part le réservoir 3 et la pompe 2. Le volume de réducteur situé entre l'accumulateur 8 et l'injecteur 5 reste maintenu sous pression par le ressort d'accumulateur qui est en compression. La pompe 2 peut alors être mise au repos. La pompe 2 sera réactivée lorsque l'accumulateur 8 sera vide afin d'effectuer un nouveau remplissage, la vanne 10 repassant alors en position ouverte au cours de cette opération.

Un filtre 14 et un capteur de pression 15 sont installés entre l'accumulateur 8 et l'injecteur 5.

L'injecteur 5 est pourvu d'un obturateur qui s'ouvre sous la pression régnant dans la canalisation 6 ou suivant une commande électrique d'ouverture, ce qui permet l'injection de réducteur dans la ligne d'échappement. Après injection, l'obturateur se ferme.

En outre, une vanne 17 est installée en amont de l'injecteur 5 entre ledit injecteur 5 et l'accumulateur 8 de réducteur. Les termes "amont" ou "aval" sont entendus lorsque la pompe 2 fonctionne en mode refoulement pour un sens de circulation du réducteur allant du réservoir 3 vers l'injecteur 5.

On décrit ci-après, en référence avec la figure 2b, les différentes étapes du procédé de purge selon l'invention mises en oeuvre par le système SCR de la figure 2a suite à une détection de l'arrêt du véhicule. Dans un état initial, le système 1 est alors sous pression, l'injecteur 5 est dans un état fermé. Les vannes 10 et 17 se trouvent respectivement dans un état fermé et ouvert.

Ce procédé de purge comporte une première phase P1 de décharge de l'accumulateur 8 visant à retrouver une pression dans le système sensiblement égale à la pression atmosphérique. A cet effet, une ouverture de la vanne 10 est commandée dans une étape 101 alors que l'injecteur 5 est maintenu dans un état fermé. La pompe 2 est activée en sens inverse dans une étape 102, c'est-à-dire dans un mode d'aspiration dans lequel le réducteur circule de l'injecteur 5 vers le réservoir 3, pendant une première durée calibrée T1.

Puis au cours d'une deuxième phase P2 de purge, l'ouverture de l'injecteur 5 est commandée dans une étape 201 et la pompe 2 est activée en mode d'aspiration dans une étape 202 au minimum jusqu'à ce que l'injecteur 5 soit vidé du réducteur qu'il contient. La pompe 2 fonctionne ainsi pendant une deuxième durée calibrée T2 inférieure à la première durée calibrée T1. A la fin de la deuxième durée calibrée T2, la vanne 17 et l'injecteur 5 sont fermés au cours d'une étape 203. Ainsi, on note que la vanne 17 est normalement en position ouverte sauf à la fin de la phase de purge P2. L'ouverture de la vanne 17 est commandée lors de la remise en fonctionnement ultérieure du système SCR.

Dans un exemple de mise en oeuvre, la durée calibrée T1 est par exemple de l'ordre de 6 secondes. La durée calibrée T2 est de l'ordre de 1 seconde. Bien entendu, ces durées calibrées pourront être adaptées en fonction de la configuration du système SCR.

La deuxième phase de purge P2 permet ainsi de vidanger uniquement l'injecteur 5 et une partie de la canalisation 6, ce qui évite que les gaz d'échappement puissent entrer dans la canalisation 6 et encrassent les différents éléments du système SCR, en particulier le filtre 14 et le capteur de pression 15. On garantit en outre que le système SCR 1 supportera les basses températures, dans la mesure où la canalisation 6 est vidée suffisamment pour autoriser une expansion volumique du réducteur en cas de gel (de l'ordre de 9% maximum). On note également que l'invention permet de limiter le temps de fonctionnement de la pompe 2 au cours de la seconde phase P2 de purge. Dé ce fait, l'invention permet d'augmenter la durabilité de la pompe 2 et de limiter la consommation électrique de manière importante compte tenu du nombre élevé d'arrêts sur la durée de vie complète du véhicule.

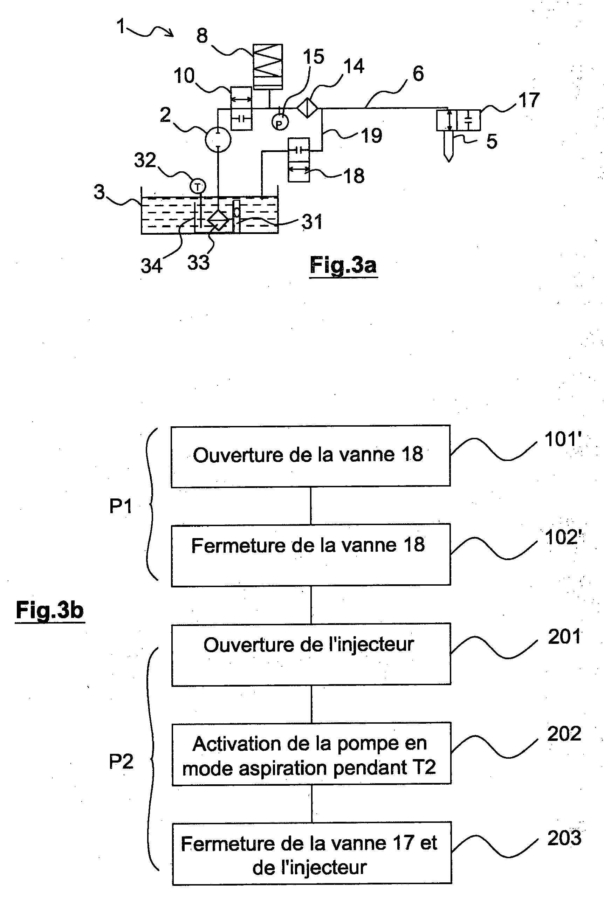

Dans un deuxième mode de réalisation représenté sur la figure 3a, le système SCR 1 comporte en outre une vanne 18 implantée sur un conduit 19 ayant une première extrémité située entre l'accumulateur 8 et l'injecteur 5 en amont de la vanne 17 et une deuxième extrémité débouchant vers le réservoir 3. Les autres éléments sont les mêmes que ceux du système SCR de la figure 2a.

On décrit ci-après, en référence avec la figure 3b, les différentes étapes du procédé de purge selon l'invention mises en oeuvre par le système SCR 1 de la figure 3a. Dans un état initial, le système 1 est alors sous pression, l'injecteur 5 est dans un état fermé. Les vannes 10 et 17 se trouvent respectivement dans un état fermé et ouvert.

La première phase P1 visant à retrouver une pression dans le système 1 sensiblement égale à la pression atmosphérique est réalisée de manière différente par rapport à la mise en oeuvre du procédé. Ainsi, le système SCR 1 étant sous pression du fait de l'état comprimé du ressort d'accumulateur, l'ouverture de la vanne 18 est commandée dans une étape 101' afin de décharger naturellement l'accumulateur 8 de réducteur dans le réservoir 3, et donc de faire diminuer la pression dans le circuit. La vanne 10 reste fermée pendant cette opération.

La vanne 18 est maintenue ouverte jusqu'à ce que la pression dans le système mesurée au moyen du capteur 15 redevienne égale à la pression atmosphérique. Alternativement, il sera possible de déterminer une période calibrée de l'ordre de quelques secondes permettant au système de revenir à pression atmosphérique dans tous les cas d'utilisation du système. Une fois la pression atmosphérique atteinte dans le système, la vanne 18 repasse à un état fermé dans une étape 102', ce qui correspond à son état par défaut. Autrement dit, la vanne 18 est en permanence à l'état fermé, sauf au moment où il est nécessaire de décharger l'accumulateur 8.

Puis, on réalise la deuxième phase de purge P2 qui est identique à celle de la mise en oeuvre du procédé conformément à la figure 2b. Ainsi, l'ouverture de l'injecteur 5 est commandée dans une étape 201 et la pompe 2 est activée en mode d'aspiration dans une étape 202 au minimum jusqu'à ce que l'injecteur 5 soit vidé du réducteur qu'il contient. La pompe 2 fonctionne ainsi pendant la durée calibrée T2. A la fin de la durée calibrée T2, la vanne 17 et l'injecteur 5 sont fermés dans une étape 203.

Ainsi, cette phase de purge P2 permet de vidanger uniquement l'injecteur 5 et une partie de la canalisation 6, ce qui évite que les gaz d'échappement puissent entrer dans la canalisation 6 et encrassent les différents éléments. En outre, l'introduction de la vanne 18 permet de réduire encore davantage la durée de fonctionnement de la pompe 2 qui n'est activée que lors de la phase de purge P2 pendant un temps très court (de l'ordre de 1 seconde pendant T2). On améliore encore donc le gain apporté par l'invention en termes de durée de vie et de consommation électrique de la pompe 2.

Les figures 4a et 4b montrent des variantes de réalisation d'une ligne d'échappement 21 d'un moteur thermique 22 sur laquelle est implanté l'injecteur 5 du système SCR 1. Dans les deux cas, l'injecteur 5 est implanté entre un catalyseur 23 d'oxydation diesel (DOC) et un bloc de dépollution 25 comportant un catalyseur du système SCR et un filtre à particules.

Dans le mode de réalisation de la figure 4b plus compact que celui de la figure 4a, les différents éléments de dépollution 23 et 25 sont rapprochés les uns des autres. En outre, le revêtement du catalyseur SCR recouvre le filtre à particules dans le bloc 25. Une telle architecture est appelée "système compact liquide".

## Revendications

1. Procédé de purge d'un système (1) de réduction catalytique sélective (SCR) pour véhicule automobile comprenant une pompe (2) réversible en relation avec un réservoir (3) de réducteur, un injecteur (5) destiné à être placé dans une ligne d'échappement du véhicule, une canalisation (6) reliant ledit injecteur (5) à ladite pompe (2), un accumulateur (8) de mise sous pression du réducteur implanté entre ladite pompe (2) et ledit injecteur (5) et une vanne (17) installée entre ledit accumulateur (8) et ledit injecteur (5), **caractérisé en ce que**, ledit système (1) étant sous pression, ledit injecteur (5) étant fermé et ladite vanne (17) étant ouverte, ledit procédé comporte une première phase (P1) de décharge de l'accumulateur (8) permettant de diminuer la pression à l'intérieur du système (1), et une deuxième phase (P2) de purge comportant l'étape d'ouvrir ledit injecteur (5) et de faire fonctionner ladite pompe (2) en mode aspiration pendant une durée calibrée (T2) puis de commander une fermeture de ladite vanne (17) et dudit injecteur (5) à la fin de ladite durée calibrée (T2).

2. Procédé selon la revendication 1, **caractérisé en ce que** ladite phase (P1) de décharge dudit accumulateur (8) comporte l'étape de faire fonctionner ladite pompe (2) en mode aspiration alors que ledit injecteur (5) est fermé pendant une durée calibrée (T1).

3. Procédé selon la revendication 2, **caractérisé en ce que** la durée calibrée (T1) de fonctionnement de la pompe lors de la première phase (P1) de décharge de l'accumulateur est supérieure à la durée calibrée (T2) de fonctionnement de la pompe lors de la deuxième phase (P2) de purge.

4. Procédé selon la revendication 1, **caractérisé en ce que**, ledit système (1) comportant en outre une vanne (18) implantée sur un conduit (19) ayant une extrémité située entre ledit accumulateur (8) et ledit injecteur (5) et une deuxième extrémité débouchant vers ledit réservoir (3), ladite première phase (P1) de décharge dudit accumulateur (8) comporte l'étape d'ouvrir ladite vanne (18) alors que le système (1) est sous pression.

5. Procédé selon l'une quelconque des revendications 1 à 4, **caractérisé en ce que** la durée calibrée (T2) de fonctionnement de la pompe lors de la deuxième phase (P2) de purge vaut environ 1 seconde.

6. Procédé selon l'une quelconque des revendications précédentes, **caractérisé en ce que** le système (1) de réduction catalytique comporte en outre une vanne (10) positionnée entre ladite pompe (2) et ledit accumulateur (8).

7. Procédé selon l'une quelconque des revendications précédentes, **caractérisé en ce que** le système (1) de réduction catalytique comporte en outre comporte un filtre (14) et un capteur de pression (15) installés entre ledit accumulateur (8) et ledit injecteur (5).

8. Procédé selon l'une quelconque des revendications précédentes, **caractérisé en ce qu'**il est mis en oeuvre pour un véhicule automobile muni dudit système de réduction catalytique, ledit véhicule comportant un injecteur (5) implanté sur une ligne d'échappement dudit véhicule automobile entre un catalyseur d'oxydation diesel (23) et un bloc (25) de dépollution comportant un catalyseur dudit système de réduction catalytique sélective associé à un filtre à particules.

## Patentansprüche

1. Verfahren zur Reinigung eines Systems (1) mit selektiver katalytischer Reduktion (SCR) für Kraftfahrzeug, das eine umkehrbare Pumpe (2) in Verbindung mit einem Reduziermittelbehälter (3), einen Injektor (5), der dazu bestimmt ist, in einer Abgasleitung des Fahrzeugs platziert zu sein, eine Kanalisation (6), die den Injektor (5) mit der Pumpe (2) verbindet, einen Speicher (8) zum Druckbeaufschlagen des Reduziermittels, der zwischen der Pumpe (2) und dem Injektor (5) angeordnet ist, und ein Ventil (17), das zwischen dem Speicher (8) und dem Injektor (5) installiert ist, umfasst, **dadurch gekennzeichnet, dass**, da das System (1) unter Druck steht, der Injektor (5) geschlossen und das Ventil (17) offen ist, wobei das Verfahren eine erste Phase (P1) zum Entleeren des Speichers (8) umfasst, die es erlaubt, den Druck im Inneren des Systems (1) zu verringern, und eine zweite Phase (P2) zum Reinigen, die den Schritt des Öffnens des Injektors (5) und des Betreibens der Pumpe (2) im Ansaugmodus während einer kalibrierten Dauer (T2) und dann das Steuern eines Schließens des Ventils (17) und des Injektors (5) am Ende der kalibrierten Dauer (T2) umfasst.

2. Verfahren nach Anspruch 1, **dadurch gekennzeichnet, dass** die Phase (P1) des Entleerens des Speichers (8) den Schritt des Betreibens der Pumpe (2) im Ansaugmodus umfasst, während der Injektor (5) während einer kalibrierten Dauer (T1) geschlossen ist.

3. Verfahren nach Anspruch 2, **dadurch gekennzeichnet, dass** die kalibrierte Dauer (T1) des Betriebs der Pumpe während der ersten Phase (P1) zum Entleeren des Speichers größer ist als die kalibrierte Betriebsdauer (T2) der Pumpe während der zweiten Reinigungsphase (P2).

4. Verfahren nach Anspruch 1, **dadurch gekennzeichnet, dass** das System (1) außerdem ein Ventil (18) umfasst, das auf einer Leitung (19), die ein Ende zwischen dem Speicher (8) und dem Injektor (5) liegend und ein zweites Ende zu dem Behälter (3) mündend hat, eingebaut ist, wobei die erste Entleerungsphase (P1) des Speichers (8) den Schritt des Öffnens des Ventils (18), während das System (1) unter Druck steht, umfasst.

5. Verfahren nach einem der Ansprüche 1 bis 4, **dadurch gekennzeichnet, dass** die kalibrierte Betriebsdauer (T2) der Pumpe während der zweiten Reinigungsphase (P2) etwa 1 Sekunde entspricht.

6. Verfahren nach einem der vorhergehenden Ansprüche, **dadurch gekennzeichnet, dass** das katalytische Reduktionssystem (1) außerdem ein Ventil (10) umfasst, das zwischen der Pumpe (2) und dem Speicher (8) positioniert ist.

7. Verfahren nach einem der vorhergehenden Ansprüche, **dadurch gekennzeichnet, dass** das katalytische Reduktionssystem (1) außerdem ein Filter (14) und einen Drucksensor (15) umfasst, die zwischen dem Speicher (8) und dem Injektor (5) installiert sind.

8. Verfahren nach einem der vorhergehenden Ansprüche, **dadurch gekennzeichnet, dass** es für ein Kraftfahrzeug umgesetzt wird, das mit dem katalytischen Reduktionssystem versehen ist, wobei das Fahrzeug einen Injektor (5) umfasst, der auf einer Abgasleitung des Kraftfahrzeugs zwischen einem Dieseloxidationskatalysator (23) und einem Reinigungsblock (25), der einen Katalysator des selektiven katalytischen Reduktionssystems verbunden mit einem Partikelfilter umfasst, eingebaut ist.

## Claims

1. A method for purging a selective catalytic reduction (SCR) system (1) for a motor vehicle, including a reversible pump (2) in relation with a reservoir (3) of reducing agent, an injector (5) intended to be placed in an exhaust line of the vehicle, a duct (6) connecting said injector (5) to said pump(2), an accumulator (8) for pressurization of the reducing agent installed between said pump (2) and said injector (5) and a valve (17) installed between said accumulator (8) and said injector (5), **characterized in that**, said system (1) being under pressure, said injector (5) being closed and said valve (17) being open, said method comprises a first phase (P1) of discharge of the accumulator (8) permitting the pressure to be reduced in the interior of the system (1), and a second phase (P2) for purging comprising the step of opening said injector (5) and of operating said pump (2) in aspiration mode for a calibrated duration (T2), then of actuating a closure of said valve (17) and of said injector (5) at the end of said calibrated duration (T2).

2. The method according to Claim 1, **characterized in that** said discharge phase (P1) of said accumulator (8) comprises the step of operating said pump (2) in aspiration mode while said injector (5) is closed for a calibrated duration (T1).

3. The method according to Claim 2, **characterized in that** the calibrated duration (T1) for operation of the pump during the first discharge phase (P1) of the accumulator is greater than the calibrated duration (T2) for operation of the pump during the second purge phase (P2).

4. The method according to Claim 1, **characterized in that**, said system (1) further comprising a valve (18) installed on a conduit (19) having an end situated between said accumulator (8) and said injector (5) and a second end opening towards said reservoir (3), said first discharge phase (P1) of said accumulator (8) comprises the step of opening said valve (18) while the system (1) is under pressure.

5. The method according to any one of Claims 1 to 4, **characterized in that** the calibrated duration (T2) of operation of the pump during the second purge phase (P2) is approximately 1 second.

6. The method according to any one of the preceding claims, **characterized in that** the catalytic reduction system (1) further comprises a valve (10) positioned between said pump (2) and said accumulator (8).

7. The method according to any one of the preceding claims, **characterized in that** the catalytic reduction system (1) further comprises a filter (14) and a pressure sensor (15) which are installed between said accumulator (8) and said injector (5).

8. The method according to any one of the preceding claims, **characterized in that** it is implemented for a motor vehicle provided with said catalytic reduction system, said vehicle comprising an injector (5) installed on an exhaust line of said motor vehicle between a diesel oxidation catalyst (23) and a depollution block (25) comprising a catalyst of said selective catalytic reduction system associated with a particulate filter.
